# EUROPEAN PATENT SPECIFICATION

(11) **EP 1 905 566 B1**
(45) Date of publication and mention of the grant of the patent: **11.11.2009**
(21) Application number: 06425654.8
(22) Date of filing: 26.09.2006
(51) Int. Cl.: B29C 45/33, B29C 45/44, B29C 33/44, B29C 33/32, B65D 41/34

(54) **Mould for manufacturing sealing caps**
Formwerkzeug zum Herstellen von Verschlusskappen
Moule pour la fabrication de bouchons

(43) Date of publication of application: 02.04.2008
(73) Proprietor: GEFIT S.p.A., 15100 Alessandria (IT)
(72) Inventor: Caruana, Alfonso, 15068 Pozzolo Formigaro AL (IT)
(74) Representative: Perani, Aurelio

(56) References cited:
- EP-A- 0 529 036
- EP-A- 1 243 398
- EP-A- 1 318 004
- EP-A1- 0 825 009
- WO-A-02/45934
- WO-A-02/070227
- DE-A1- 3 439 212
- US-A1- 3 020 594
- US-A1- 4 019 711
- US-A1- 5 925 303
- US-A1- 6 099 785

## Description

The present invention relates to a mould for manufacturing sealing caps from plastics material for bottles, each cap comprising a top wall, a tubular skirt around the top wall and a security ring connected to the free edge of the tubular skirt by a weakening line formed by a plurality of axial stems spaced apart by open circumferential areas, the said mould having the characteristics stated in the introductory part of Claim 1 below.

It is known that sealing caps made from plastics material, with security rings which can be broken when the cap is first opened, are manufactured by means of moulds provided with movable inserts, portions of which, in a first position, occupy the space intended to form, in the moulded product, corresponding open areas between one stem and another in the weakening line, and that, in another position, retracted with respect to the first position, the inserts allow the moulded piece to be removed from the mould.

In the prior art, these inserts are generally carried by slide members or cheeks positioned at the sides of the body of the mould into which the plastics material is cast or injected to form the product.

These slides or cheeks are placed opposite each other and are movable orthogonally with respect to the longitudinal axis of the mould cavity along which the mould elements move to close and open the impression for the product, which in this case is the sealing cap with the security ring.

In this known art, therefore, the aforesaid slide members or cheeks occupy a considerable space around the annular body of the mould of each impression when they are in the retracted position to enable the moulded product to be removed.

This is a drawback in that it limits the number of impressions that can be contained in a single mould, and therefore limits the output of the moulding equipment using the said mould.

Prior art document US 6.099,785, which discloses the features of the preamble of claim 1, describes a mould for manufacturing sealing caps, wherein inserts are provided to form the open areas between the cap and the security ring. The inserts are movable in the cavity of the mould, in a transversal direction with respect to the longitudinal axis of the mould. The inserts are inside the cap itself within the mould. This mould provides a complex structure of the inserts and of the means for guiding and supporting the inserts.

The object of the present invention is therefore to overcome the drawback encountered in the moulds used in the known art, by proposing a solution for reducing the overall radial extent of the set of mould elements for each impression, in such a way that the number of these sets can be increased for a given surface area of the said mould, and consequently for a given surface area of a standard plate of a moulding machine.

This object is achieved with a mould in accordance with the characterizing clause of Claim 1 below.

The invention will now be described more fully with reference to a practical example of embodiment, provided solely for guidance and without restrictive intent, and illustrated in the attached drawings, in which:
- Figure 1 shows a perspective view in partial cross section of an example of a sealing cap with a security ring of the type to which the mould according to the invention relates;
- Figure 2 shows a perspective view taken from the open base of the sealing cap of Figure 1;
- Figure 3 shows a perspective view of a schematic axial section of the mould according to the invention in the closed position for moulding a sealing cap of the type shown in Figure 1;
- Figure 4 shows a perspective view of a schematic axial section illustrating the wedge-shaped bodies of the mould;
- Figures 5, 6 and 7 show schematic axial sections of the mould assembly in corresponding operating positions;
- Figure 8 shows schematically the neighbouring positions of a plurality of impressions for individual caps according to the invention, these impressions being arranged within a single mould which is positioned on a conventional plate of standard dimensions of a moulding machine.

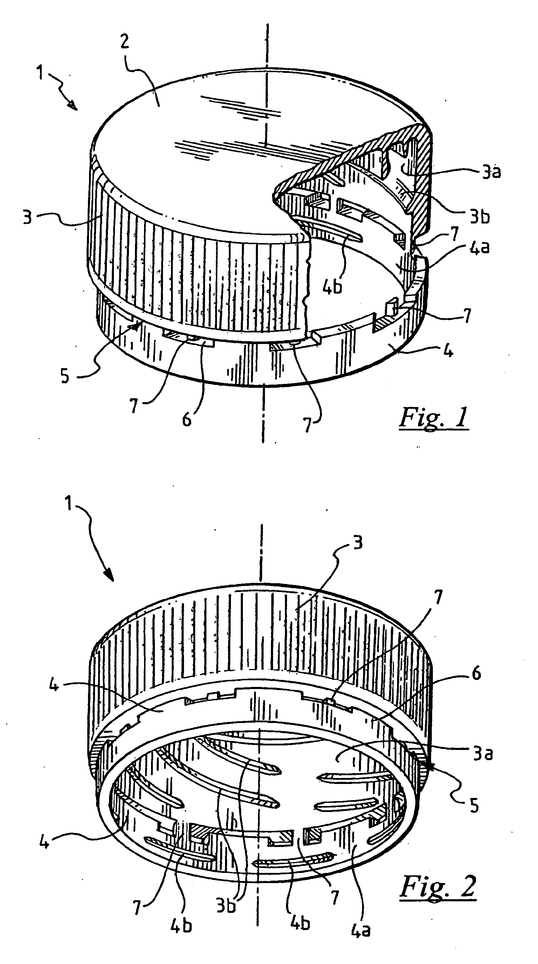

With reference to the aforesaid figures and particularly to Figures 1 and 2, it will be seen that numeral 1 indicates the whole of the sealing cap intended to be manufactured by the mould according to the invention. It comprises a top wall 2 around which a tubular skirt 3 is positioned. The latter is connected to a security ring 4 by means of a circumferential weakening line indicated in its entirety by 5.

In a conventional manner for the specific field of the art, the weakening line 5 consists of a sequence of apertures 6, extending in circumferential portions, alternating with axial connecting stems 7.

On its inner wall 3a, the tubular skirt 3 is provided, in a conventional manner, with a thread 3b which can engage with a counter-thread carried by the neck of the bottle (not shown in the drawings) for which the cap is intended. Similarly, the inner wall 4a of the security ring 4 is provided with projections 4b intended to engage in a conventional way with an anchoring flange which is also provided on the neck of the bottle, so as to prevent axial movement with respect to the bottle.

As is known, when the bottle is first opened by unscrewing the cap 1, the security ring 4 is held axially on the neck of the bottle by the projections 4b, and the axial movement of the skirt 3 resulting from the unscrewing of the cap causes the rupture of the links 7 of the weakening line 5 and the separation of the security ring 4 from the rest of the cap 1, thus providing visible proof that the first opening has taken place. For fabricating sealing caps of the aforementioned type, it is found necessary to form the security ring 4, together with the circumferential apertures 6 and the axial links 7 constituting the weakening line, in one piece during the moulding.

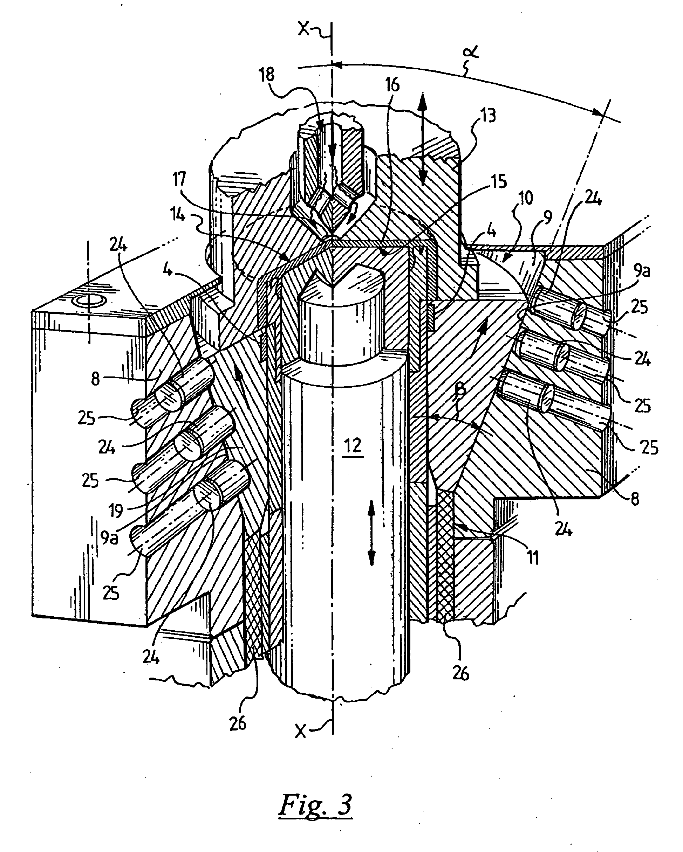

For this purpose, the mould according to the present invention, as shown schematically in Figure 3, comprises an annular body 8 which forms a tubular cavity 9 open at its axial ends 10 and 11. This tubular cavity has a conical shape for at least a portion of its axial extension, with a cone angle (α).

The mould also comprises, in a conventional manner, a first bar-like element 12 and at least a second bar-like element 13 opposing and aligned with each other along their longitudinal axis and with the axis of the said tubular cavity 9, these axes coinciding with each other to form a single axis indicated by X-X. The bar-like elements 12 and 13, together with other conventional mould elements which are not specifically illustrated and described because they are not necessary for the understanding of the present invention, form, with their opposing ends 14 and 15, the mould impression 16 for the sealing cap 1 and for the corresponding security ring 4. The bar-like element 13, in the illustrated example, carries the aperture 17 for the injection of the plastics material into the impression 16. The plastics material reaches the aperture 17 via the casting channel 18. The bar-like elements 12 and 13 are movable with respect to each other along the axis X-X to close and open the impression 16.

In order to form the open circumferential areas 6 of the weakening line 5 between the skirt 3 of the cap and its security ring 4, the mould according to the invention has a plurality of devices 19 for supporting and moving the inserts which are housed in the cavity 9 of the annular body 8.

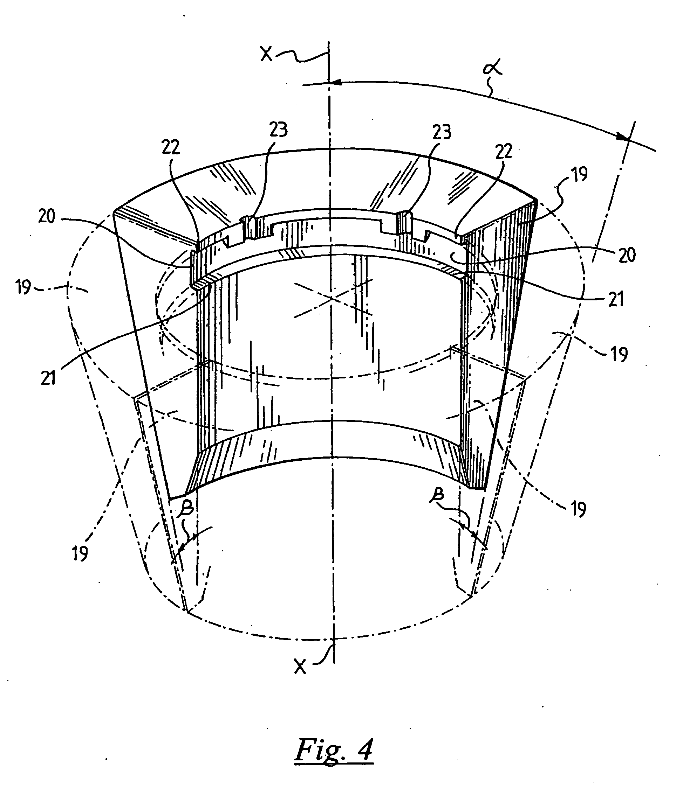

Each device 19, as shown in detail in Figure 4, consists of a curved body whose cross section, when viewed in an axial plane passing through the longitudinal axis X-X of the annular body 8, takes the form of a wedge. The taper angle (β) of this wedge-shaped cross section is equal to the cone angle (α) of the cavity 9 whose flare faces the mould element 13 provided with the aperture 17 for injecting the plastics material into the impression 16. The devices 19, as shown more fully in Figure 4, are distributed circumferentially about the axis X-X of the cavity 9 of the annular body 8 of the mould, and are in lateral contact with each other and in radial contact with the surface of the conical inner wall of the said cavity 9.

With reference to Figure 4, it can be seen that each device 19 comprises a circumferential groove 20 corresponding to a portion of the security ring 4 of the cap. The grooves 20 of the various devices 19 are adjacent to each other in the mould and thus form the impression of the whole security ring 4.

The groove 20 in each device 19 is delimited axially by corresponding shoulders 21 and 22. The shoulder 22 which faces the impression 16 of the mould, because it projects towards the axis X-X of the cavity 9, forms the portion of insert intended to occupy the spaces which become the apertures 6 in the moulded cap. The same shoulder 22 is provided with axial notches 23 which form hollow areas in which are formed the stems 7 which connect the security ring 4 to the skirt 3 of the cap.

The shoulder 22 with its notches 23 thus constitutes the insert which is intended to form the weakening line 5 of the cap 1.

According to the invention, the devices for moving the inserts 22, 23, which define the open circumferential areas 6 of the weakening line 5, comprise a plurality of permanent magnets 24 inserted into corresponding housings 25, the latter being formed in the annular body 8 in a direction which is preferably perpendicular to the conical wall 9a of the cavity 9. The devices 19 consist of ferromagnetic material, and are therefore retained against the conical wall 9a of the chamber 9, while being movable axially when pushed in this direction by a driving element, indicated by 26, which is positioned, for example, concentrically with the mould element 12.

Preferably, the permanent magnets 24 and the corresponding housings 25 are positioned in alignment along generatrices of the conical wall 9a of the cavity 9 and are provided in a sufficient number to ensure the adhesion of the devices 19 to the said wall.

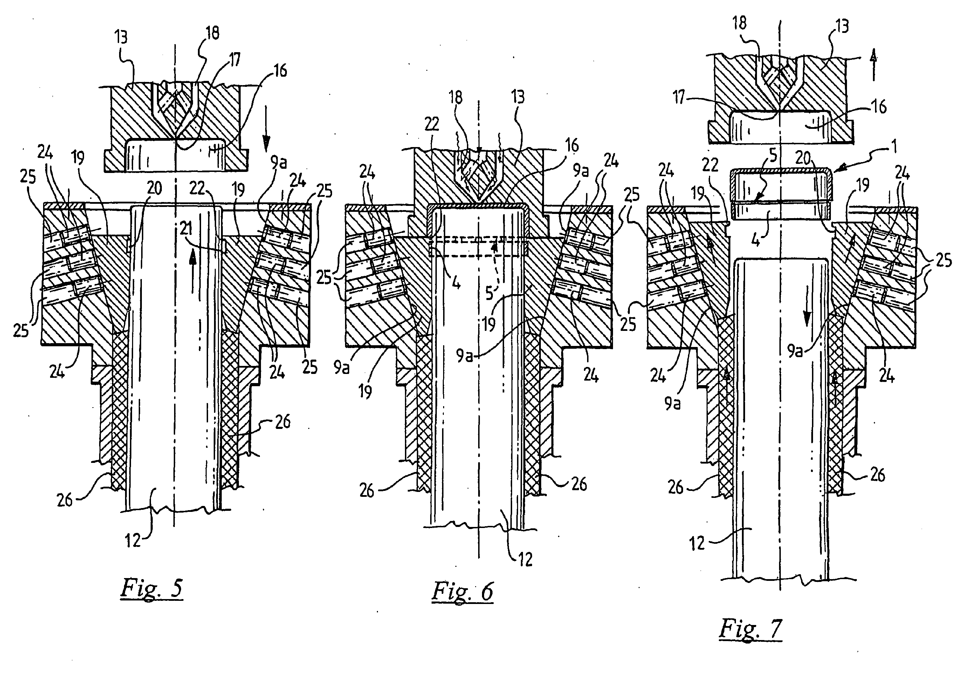

With reference to Figures 5, 6 and 7, it can be seen that, starting from the open mould position shown in Figure 5, the mould is closed as shown schematically in Figure 6. In this position, the plastics material is injected into the impression 16 through the orifice 17 of the mould element 13, for the formation in one piece of the cap 1, including the security ring 4 and the corresponding weakening line 5 which connects it to the free edge of the skirt 3, as a result of the presence of the devices 19 and the corresponding insert portions 22.

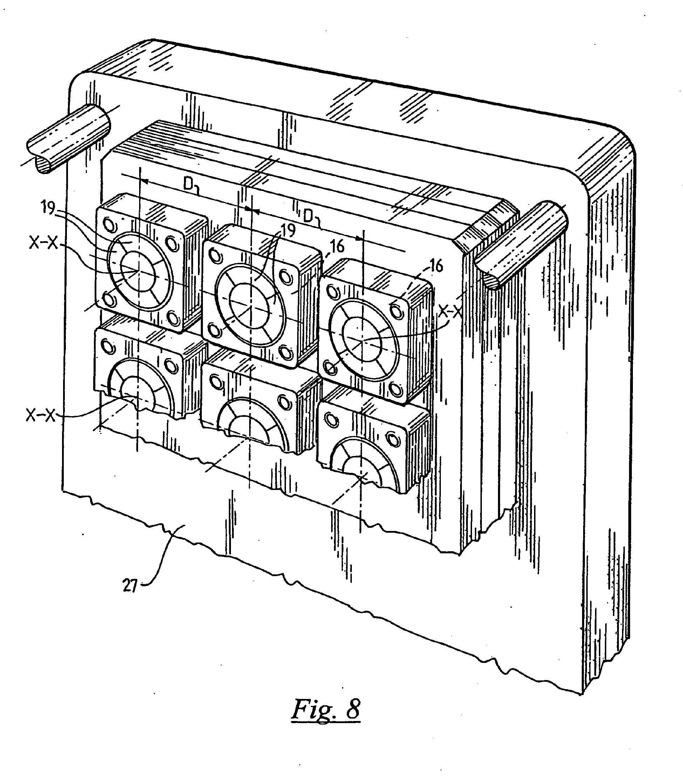

On completion of the moulding, the removal of the finished piece is made possible by the axial movement imparted to the devices 19 by the element 26. The axial movement of each device 19 takes place with adhesion to the conical wall 9a, owing to the action of the permanent magnets 24, thus causing a radial movement sufficient to move the shoulders 21 and 22 away from the impression 16, releasing the piece which can then be removed from the mould in an entirely conventional manner. The above description and illustration, referring to the attached drawings, demonstrate that the support and the movement of the insert portions for forming the security ring 4 and the weakening line 5 are provided within the annular body 8 of the mould. This characteristic makes it possible to limit the total space required to provide the individual impressions adjacent to each other, as shown schematically in Figure 8, within a conventional mould. In other words, for a given surface area of the aforesaid mould and given surface dimensions of a standard plate 27 of a conventional moulding machine, the total number of impressions in the said mould is advantageously increased, and therefore the output of the aforesaid moulding machine is increased.

In practice, in the preferred case, the distance D between the axes X-X of each impression of the mould for fabricating sealing caps of the aforementioned type can be reduced from 90 mm to 60 mm in both orthogonal directions.

## Claims

1. Mould for manufacturing sealing caps (1) from plastics material for bottles, each cap comprising a top wall (2), a tubular skirt (3) around the top wall and a security ring (4) connected to the free edge of the tubular skirt (3) by a weakening line (5) formed by a plurality of axial stems (7) spaced apart by open circumferential areas (6), the said mould comprising:
- an annular body (8) forming a tubular cavity (9) open at its axial ends (10, 11);
- at least a pair of bar-like elements (12, 13) opposing and aligned with each other along their longitudinal axis (X-X) and with the axis of the said tubular cavity (X-X), the said elements being movable with respect to each other along the said axis (X-X) to close and open a mould impression (16) for the cap and the corresponding security ring (4) between their opposing ends, one of the said bar-like elements (13) being provided with an aperture (17) for the injection of the plastics material for moulding the sealing cap (1) and the corresponding security ring (4) within the said impression (16);
- a plurality of inserts (22) to define, in the said impression (16), the said open circumferential areas (6) of the said weakening line (5) to be formed between the tubular skirt (3) and the security ring (4), the said inserts (22) being movable at least in the direction perpendicular to the axis (X-X) of the said cavity to occupy and release the said areas of the impression (16);
- together with devices for supporting (19) and moving (9a, 24, 25) the said inserts; all movements of the inserts (22) taking place within the cavity (9),
**characterized in that** the inserts (22) of the said plurality of inserts and the corresponding devices for supporting (19) and moving (9a, 24, 25) the said inserts are positioned within the tubular cavity (9) of the said annular body (8) and within the said annular body (8), and **in that** the said devices (19) consist of ferromagnetic material and are retained against the surface of a conical inner wall (9a) of the cavity (9) by a plurality of permanent magnets (24) positioned in corresponding housings (25) formed in the said annular body (8).

2. Mould according to Claim 1, **characterized in that** the tubular cavity (9) of the said annular body (8) is conical over at least a portion of its axial extension, the flare of the conicity facing the mould element (13) provided with an aperture (17) for the injection of the plastics material into the impression (16).

3. Mould according to Claims 1 and 2, **characterized in that** the said devices (19) for supporting and moving the said inserts (22) to define the open circumferential areas (6) of the said weakening line (5) consists of curved bodies having a wedge-shaped cross section with a taper angle (β) equal to the cone angle (α) of the said cavity (9) of the annular body (8) of the mould, when the said cross section is viewed in planes passing through the longitudinal axis (X-X) of the cavity.

4. Mould according to Claims 1 to 3, **characterized in that** the said devices (19) for supporting and moving the said inserts (22) for defining the open circumferential areas (6) of the said weakening line (5) are distributed circumferentially about the axis (X-X) of the said cavity (9) of the annular body (8) of the mould and are in contact laterally with each other and radially with the surface (9a) of the conical inner wall of the said cavity (9).

5. Mould according to Claim 1, **characterized in that** the said permanent magnets (24) are distributed in rows positioned along the generatrices of the conical wall (9a) of the said cavity (9).

6. Mould according to Claims 1 to 5, **characterized in that** the said inserts (22) for defining the open circumferential areas (6) of the said weakening line (5) are portions of the corresponding support and movement devices (19).

7. Mould according to Claims 1 to 6, **characterized in that** each of the said devices (19) for supporting the said inserts (22) comprises a circumferential groove (20) corresponding to a portion of the said security ring (4) of the sealing cap, the said groove being delimited axially by corresponding shoulders (21, 22), the axial shoulder (22) facing the impression (16) of the sealing cap defining the insert portion for forming the open areas (6) of the weakening line (5).

## Patentansprüche

1. Formwerkzeug zum Herstellen von Verschlußkappen (1) aus Kunststoff für Flaschen, wobei jede Kappe eine obere Wand (2), eine rohrförmige Randleiste (3) um die obere Wand herum und einen Sicherheitsring (4) umfaßt, der mit dem freien Rand der rohrförmigen Randleiste (3) über eine Schwächungslinie (5) verbunden ist, die von einer Mehrzahl von durch offene Umfangsbereiche (6) getrennten axialen Stielen gebildet wird, wobei das Formwerkzeug umfaßt:
- einen ringförmigen Körper (8), welcher einen rohrförmigen Hohlraum (9) bildet, der an seinen axialen Enden (10, 11) offen ist,
- wenigstens ein Paar stangenähnlicher Elemente (12, 13), die sich gegenüberliegen und miteinander entlang ihrer Längsachse (X-X) und mit der Achse (X-X) des rohrförmigen Hohlraums ausgerichtet sind, wobei die Elemente relativ zueinander entlang der Achse (X-X) zum Öffnen und Schließen einer Gußform (16) für die Kappe und den zugehörigen Sicherheitsring (4) zwischen ihren gegenüberliegenden Enden beweglich sind und wobei eines der stangenförmigen Elemente (13) mit einer Öffnung (17) für das Einspritzen des Kunststoffmaterials zum Formen der Verschlußkappe (1) und des zugehörigen Sicherheitsrings (4) innerhalb der Gußform (16) versehen ist,
- eine Mehrzahl von Einsätzen (22), um in der Gußform (16) die offenen Umfangsbereiche (6) der zwischen der rohrförmigen Randleiste (3) und dem Sicherheitsring (4) zu bildenden Schwächungslinie (5) zu definieren, wobei die Einsätze (22) zumindest in die zur Achse (X-X) des Hohlraums senkrechte Richtung beweglich ist, um die besagten Bereiche der Gußform zu besetzen und freizugeben,
- zusammen mit Vorrichtungen zum Stützen (19) und Bewegen (9a, 24, 25) der Einsätze,
wobei alle Bewegungen der Einsätze (22) innerhalb des Hohlraums (9) stattfinden,
**dadurch gekennzeichnet, daß** die Einsätze (22) der Mehrzahl von Einsätzen und die zugehörigen Vorrichtungen zum Stützen (19) und Bewegen (9a, 24, 25) der Einsätze innerhalb des rohrförmigen Hohlraums (9) des ringförmigen Körpers (8) und innerhalb des ringförmigen Körpers (8) angeordnet sind und daß die Vorrichtungen (19) aus ferromagnetischem Material ausgebildet sind und gegen die Oberfläche einer kegelförmigen inneren Wand (9a) des Hohlraums (9) mittels einer Mehrzahl von Permanentmagneten (24) gehalten werden, die in dazugehörigen in dem ringförmigen Körper (8) gebildete Aufnahmen (25) angeordnet sind.

2. Formwerkzeug nach Anspruch 1, **dadurch gekennzeichnet, daß** der rohrförmige Hohlraum (9) des ringförmigen Körpers (8) zumindest über einen Abschnitt seiner axialen Ausdehnung kegelförmig ist, wobei die dem Element (13) zugewandte Grundfläche der mit einer Öffnung (17) zum Einspritzen des Kunststoffsmaterial in die Gußform (16) versehen ist.

3. Formwerkzeug nach Anspruch 1 und 2, **dadurch gekennzeichnet, daß** die Vorrichtungen (19) zum Stützen und Bewegen der Einsätze (22), welche die offenen Umfangsbereiche (6) der Schwächungslinie (5) definieren, aus gebogenen Körpern mit einem keilförmigen Querschnitt bestehen, wobei der Kegelwinkel (β) dem Kegelwinkel (α) des Hohlraums (9) des ringförmigen Körpers (8) des Formwerkzeuges gleicht, wenn der Querschnitt in Axialebenen, welche durch die Längsachse (X-X) des Hohlraums verlaufen, betrachtet wird.

4. Formwerkzeug nach den Ansprüchen 1 bis 3, **dadurch gekennzeichnet, daß** die Vorrichtungen (19) zum Stützen und Bewegen der Einsätze (22), welche die offenen Umfangsbereiche (6) der Schwächungslinie (5) definieren, um die Achse (X-X) des Hohlraums (9) des ringförmigen Körper (8) des Formwerkzeugs umlaufend verteilt und seitlich in Kontakt miteinander und radial mit der Oberfläche (9a) der kegelförmigen inneren Wand des Hohlraums (9) in Kontakt sind.

5. Formwerkzeug nach Anspruch 1, **dadurch gekennzeichnet, daß** die Permanentmagnete (24) entlang der Mantellinien der kegelförmigen Wand (9a) des Hohlraums (9) in Reihen angeordnet sind.

6. Formwerkzeug nach den Ansprüchen 1 bis 5, **dadurch gekennzeichnet, daß** die Einsätze (22), die die offenen Umfangsbereiche (6) der Schwächungslinie (5) definieren, Abschnitte der zugehörigen Stütz- und Bewegungsvorrichtungen (19) sind.

7. Formwerkzeug nach den Ansprüchen 1 bis 6, **dadurch gekennzeichnet, daß** jede der Vorrichtungen (19) zum Stützen der Einsätze (22) eine umlaufende Nut (20) aufweist, die mit einem Abschnitt des Sicherheitsringes (4) der Verschlußkappe korrespondiert, wobei die Nut axial durch entsprechende Schultern (21, 23) begrenzt wird und wobei die der Gußform (16) der Verschlußkappe zugewandte axiale Schulter (22) den Einsatzabschnitt zum Bilden der offenen Umfangsbereiche (6) der Schwächungslinie (5) definiert.

## Revendications

1. Moule pour la fabrication de bouchons de fermeture (1) à partir d'une matière plastique pour bouteilles, chaque bouchon comprenant une paroi supérieure (2), une jupe tubulaire (3) autour de la paroi supérieure et une bague de sécurité (4) reliée à l'extrémité libre de la jupe tubulaire (3) par une ligne d'affaiblissement (5) formée par une pluralité de tiges axiales (7) espacées par des zones circonférentielles ouvertes (6), ledit moule comprenant:
- un corps annulaire (8) formant une cavité tubulaire (9) ouverte à ses extrémités axiales (10, 11);
- au moins une paire d'éléments semblables à des barres (12, 13) opposées et alignées les unes avec les autres le long de leur axe longitudinal (X-X) et avec l'axe de ladite cavité tubulaire (X-X), lesdits éléments étant mobiles les uns par rapport aux autres le long dudit axe (X-X) pour fermer et ouvrir une empreinte (16) pour le bouchon et la bague de sécurité (4) correspondante entre leurs extrémités opposées, l'un desdits éléments semblables à une barre (13) étant pourvu d'une ouverture (17) pour l'injection de la matière plastique destinée au moulage du bouchon de fermeture (1) et de la bague de sécurité (4) correspondante dans ladite empreinte (16) ;
- une pluralité d'inserts (22) pour définir, dans ladite empreinte (16), lesdites zones circonférentielles ouvertes (6) de ladite ligne d'affaiblissement (5) à former entre la jupe tubulaire (3) et la bague de sécurité (4), lesdits inserts (22) étant mobile dans au moins une direction perpendiculaire à l'axe (X-X) de ladite cavité, pour occuper et quitter lesdites zones de l'empreinte (16) ;
- ensemble avec des dispositifs pour le support (19) et le mouvement (9a, 24, 25) desdits inserts ;
tous les mouvements des inserts (22) ayant lieu à l'intérieur de la cavité (9), **caractérisé en ce que**
les inserts (22) de ladite pluralité d'inserts et les dispositifs correspondants pour le support (19) et le mouvement (9a, 24, 25) desdits inserts sont disposés à l'intérieur de la cavité tubulaire (9) dudit corps annulaire (8) et à l'intérieur dudit corps annulaire (8), et **en ce que** lesdits dispositifs (19) sont constitués d'un matériau ferromagnétique et sont retenus contre la surface d'une paroi intérieure conique (9a) de la cavité (9), par une pluralité d'aimants permanents (24) disposés dans des logements (25) correspondants formés dans ledit corps annulaire (8).

2. Moule selon la revendication 1, **caractérisé en ce que** la cavité tubulaire (9) dudit corps annulaire (8) est conique sur au moins une portion de son extension axiale, l'évasement du cône faisant face à l'élément de moule (13) pourvu d'une ouverture (17) pour l'injection de la matière plastique dans l'empreinte (16).

3. Moule selon les revendications 1 et 2, **caractérisé en ce que** lesdits dispositifs (19) pour le support et le mouvement desdits inserts (22) pour définir les zones circonférentielles ouvertes (6) de ladite ligne d'affaiblissement (5) sont constitués de corps courbes possédant une section transversale en forme de coin, avec un angle de cône (β) égal à l'angle de cône (α) de ladite cavité (9) du corps annulaire (8) du moule, lorsque ladite section transversale est vue en plans axiaux traversant l'axe longitudinal (X-X) de la cavité.

4. Moule selon les revendications 1 à 3, **caractérisé en ce que** lesdits dispositifs (19) pour le support et le mouvement desdits inserts (22) pour définir les zones circonférentielles ouvertes (6) de ladite ligne d'affaiblissement (5) sont répartis de façon circonférentielle autour de l'axe (X-X) de ladite cavité (9) du corps annulaire (8) du moule, et sont en contact latéralement les uns avec les autres et radialement avec la surface (9a) de la paroi intérieure conique de ladite cavité (9).

5. Moule selon la revendication 1, **caractérisé en ce que** lesdits aimants permanents (24) sont répartis en rangées disposées le long des génératrices de la paroi conique (9a) de ladite cavité (9).

6. Moule selon les revendications 1 à 5, **caractérisé en ce que** lesdits inserts (22) pour définir les zones circonférentielles ouvertes (6) de ladite ligne d'affaiblissement (5) sont des portions des dispositifs correspondants (19) pour le support et le mouvement.

7. Moule selon les revendications 1 à 6, **caractérisé en ce que** chacun des dispositifs (19) pour le support desdits inserts (22) comprend une rainure circonférentielle (20) correspondant à une portion de ladite bague de sécurité (4) du bouchon de fermeture, ladite rainure étant axialement délimitée par des épaules (21, 22) correspondantes, les épaules axiales (22) se trouvant en face de l'empreinte (16) du bouchon de fermeture, définissant la portion d'insert pour la formation des zones ouvertes (6) de la ligne d'affaiblissement (5).
